# FASCICULE DE BREVET EUROPEEN

(11) **EP 1 966 568 B1**
(45) Date de publication et mention de la délivrance du brevet: **25.02.2009**
(21) Numéro de dépôt: 06842161.9
(22) Date de dépôt: 14.12.2006
(51) Int. Cl.: G01F 1/06

(54) **TURBINE POUR COMPTEUR DE FLUIDE, EN PARTICULIER D'EAU**
TURBINE FÜR EIN FLÜSSIGKEITSMESSGERÄT, INSBESONDERE EIN WASSERMESSGERÄT
TURBINE FOR FLUID METER, PARTICULARLY WATER METER

(30) Priorité: 20.12.2005 FR 0553973
(43) Date de publication de la demande: 10.09.2008
(73) Titulaire: Actaris SAS, 92100 Boulogne Billancourt (FR)
(72) Inventeur: CHAMOSSET, Jérôme, F-71000 MACON (FR); DARRAS, Arnaud, F-69002 Lyon (FR)
(74) Mandataire: Lenne, Laurence
(86) Numéro de dépôt international: PCT/FR2006/051351
(87) Numéro de publication internationale: WO 2007/074270

(56) Documents cités:
- FR-A- 2 673 293
- GB-A- 470 963
- GB-A- 2 388 193
- US-A1- 2004 144 427
- PATENT ABSTRACTS OF JAPAN vol. 2002, no. 06, 4 juin 2002 (2002-06-04) & JP 2002 039817 A (TOKYO PIGEON CO LTD), 6 février 2002 (2002-02-06)

## Description

L'invention concerne une turbine pour compteur de fluide, en particulier d'eau.

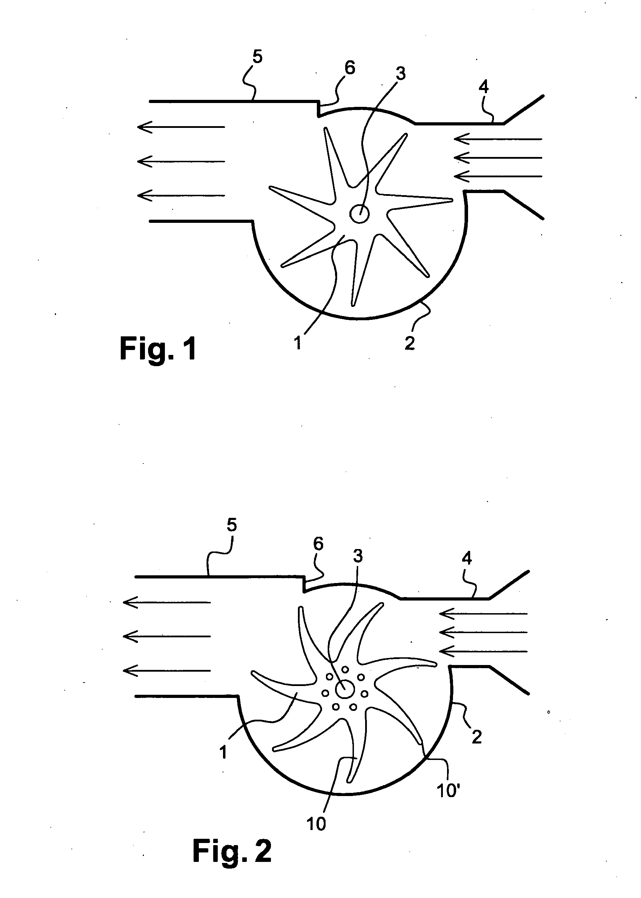

Une telle turbine connue est représentée schématiquement en vue de dessus sur la figure 1, installée dans une bâche.

Dans un compteur d'eau, une telle turbine 1 est disposée dans une partie cylindrique appelée chambre d'une bâche 2 qui assure la liaison étanche avec les canalisations d'entrée et de sortie de l'eau. La turbine est montée sur un axe de rotation 3 sensiblement centré dans la chambre et l'eau entrant par la tubulure d'entrée 4 de la bâche entraîne en rotation la turbine puis sort par la tubulure de sortie 5 de la bâche.

L'inclinaison des pales de la turbine est choisie pour réduire le couple hydraulique résistant. Le nombre de pales de la turbine est lui choisi en fonction de la chambre pour avoir en permanence au minimum une pale motrice.

L'objet de l'invention est d'obtenir une diminution optimale du frein hydraulique d'une telle turbine.

Une optimisation de la forme et de l'agencement des pales permet d'augmenter l'action de l'eau sur chaque pale et donc le couple moteur sur l'axe de la turbine, le but de l'amélioration étant que la vitesse de rotation de la turbine reste proportionnelle au débit pour plus une large gamme de débits.

Il est connu du document de brevet GB 470 963 d'utiliser des pales pleines présentant une section transversale à bords courbes et dont l'extrémité libre est conformée tangentiellement à la paroi de la chambre.

De telles pales pleines sont lourdes et le frottement, lorsque la turbine tourne en appui sur son pivot, est relativement important.

De plus de telles pales sont relativement difficiles à fabriquer.

L'invention résout ces problèmes et, pour ce faire, elle propose une turbine pour compteur de fluide, en particulier d'eau, destinée à être montée rotative dans une chambre cylindrique d'une bâche de compteur et comportant une pluralité de pâtes, ces pales présentant une section transversale à bords semi-paraboliques dont l'extrémité libre est conformée tangentiellement à la paroi de ladite chambre, caractérisé en ce que chaque pale est constituée de deux parois semi-paraboliques connectées l'une à l'autre par des éléments de renfort mécaniques.

La forme semi-parabolique permet d'amener progressivement la direction de la vitesse du fluide parallèle à la direction recherchée à l'extrémité libre de chaque pale.

Dans la chambre, le fluide est en rotation autour de l'axe de la turbine et la direction de sa vitesse dans la région proche de la paroi de la chambre est tangente à cette dernière. Grâce à l'invention, les turbulences, qui augmentent avec le gradient du vecteur vitesse, sont alors diminuées.

Le fait que la turbine soit constituée de parois fines rend plus facile la mise au point du moule de fabrication et permet d'obtenir un procédé de fabrication répétable.

L'intérêt de ce mode réalisation est aussi la réduction de masse donc du poids dans l'eau de la turbine, et par là même du frottement sur les paliers et le pivot.

De préférence, lesdits éléments de renfort sont constitués d'éléments tubulaires à section transversale circulaire.

Ces éléments de renfort présentent l'avantage de pouvoir être utilisés comme appuis pour des éjecteurs lors du moulage de la turbine qui est avantageusement en matière plastique.

L'invention concerne également un compteur de fluide, en particulier d'eau, équipé d'une telle turbine, caractérisé en ce que cette turbine est montée rotative dans une chambre de mesure cylindrique à jet unique.

L'invention est décrite ci-après plus en détail à l'aide de figures ne représentant qu'un mode de réalisation préféré de l'invention.
La figure 1 déjà évoquée représente schématiquement une turbine conforme à l'art antérieur.
La figure 2 représente schématiquement une turbine conforme à l'invention.
La figure 3. est une vue de dessus d'une turbine conforme à l'invention.
La figure 4 est une vue de face d'une turbine conforme à l'invention. Comme illustrée, montée dans une chambre de mesure cylindrique à jet unique d'une bâche 2 de compteur de fluide, en particulier d'eau, une turbine 1 conforme à l'invention comporte une pluralité de pales 10, par exemple sept pales, qui présentent une section transversale à bords semi-paraboliques dont l'extrémité libre est conformée tangentiellement à la paroi de la chambre.

Grâce à cette forme arrondie des pales, le couple réisistant est diminué et la sensibilité du compteur est augmentée.

Sans modifier la configuration de la bâche du compteur et en utilisant des paliers identiques, grâce à cette forme arrondie des pales, la turbine tourne plus vite. Le fait que la turbine tourne plus vite que celle décrite connue selon l'art antérieur signifie qu'elle est moins freinée hydrauliquement, ce qui a comme conséquence un débit de démarrage plus faible, et permet d'offrir une plus grande dynamique de fonctionnement de produit dans les faibles débits.

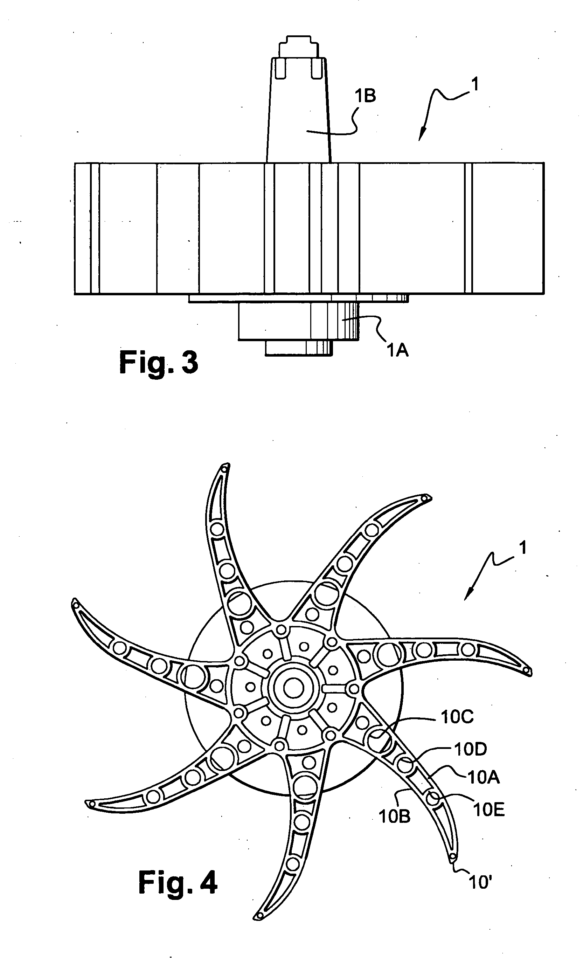

Les figures 3 et 4 illustrent de façon plus détaillée une turbine conforme à l'invention.

De façon connue en soi, la turbine en matière plastique, par exemple en polypropylène chargé, comporte une partie cylindrique inférieure 1A qui est destinée à former un palier inférieur et une partie conique supérieure 1 B servant de palier supérieur. Cette partie supérieure 1 B assure également la liaison avec le totaliseur du compteur, afin de permettre le comptage et la mesure du débit.

La turbine conforme à l'invention peut être utilisée pour la mesure de haut débit pouvant aller jusqu'à 230 m3/h et peut présenter un diamètre de l'ordre de 25 cm.

Chaque pale est constituée de deux parois semi-paraboliques 10A, 10B, connectées l'une à l'autre par des éléments de renfort mécaniques 10C, 10D, 10 E constitués d'éléments tubulaires à section transversale circulaire. Ces éléments de renfort sont répartis sur la longueur de la pale selon la répartition des efforts.

## Revendications

1. Turbine (1) pour compteur de fluide, en particulier d'eau, destinée à être montée rotative dans une chambre cylindrique (2) d'une bâche de compteur et comportant une pluralité de pales (10), ces pales présentant une section transversale à bords semi-paraboliques dont l'extrémité libre (10') est conformée tangentiellement à la paroi de ladite chambre, **caractérisée en ce que** chaque pale est constituée de deux parois semi-paraboliques connectées l'une à l'autre par des éléments de renfort mécaniques (10A, 10B, 10C).

2. Turbine selon la revendication précédente, **caractérisée en ce que** lesdits éléments de renfort sont constitués d'éléments tubulaires à section transversale circulaire.

3. Turbine selon l'une des revendications précédentes, **caractérisée en ce qu'**elle est en matière plastique.

4. Compteur de fluide, en particulier d'eau, équipé d'une turbine conforme à l'une des revendications précédentes, **caractérisé en ce que** cette turbine (1) est montée rotative dans une chambre de mesure cylindrique (2) à jet unique.

## Claims

1. A turbine (1) for a fluid meter, in particular a water meter, designed to be rotatingly mounted in a cylindrical chamber (2) of a meter housing and comprising a plurality of vanes (10), the vanes having a cross-section with semi-parabolic edges, the free end (10') of which is shaped tangentially to the wall of said chamber, **characterized in that** each vane is composed of two semi-parabolic walls connected to each other by mechanical stiffening members (10A, 10B, 10C).

2. The turbine according to the preceding claim, **characterized in that** said stiffening members are composed of tubular members with circular cross-section.

3. The turbine according to any of the preceding claims, **characterized in that** it is made of plastic material.

4. A fluid meter, in particular a water meter, fitted with a turbine according to any of the preceding claims, **characterized in that** said turbine (1) is rotatingly mounted in a single jet cylindrical measuring chamber (2).

## Patentansprüche

1. Turbine (1) für einen Fluidzähler, insbesondere einen Wasserzähler, die dazu gedacht ist, drehbar in einer zylindrischen Kammer (2) eines Zählergehäuses eingebaut zu werden und eine Vielzahl von Schaufeln (10) umfasst, wobei diese Schaufeln einen Querschnitt mit halbparabolischen Rändern aufweisen, von denen das freie Ende (10') tangential an die Wand der Kammer angepasst ist, **dadurch gekennzeichnet, dass** jede Schaufel aus zwei halbparabolischen Wänden besteht, die durch mechanische Verstärkungselemente (10A, 10B, 10C) miteinander verbunden sind.

2. Turbine nach dem vorhergehenden Anspruch, **dadurch gekennzeichnet, dass** die Verstärkungselemente aus röhrenförmigen Elementen mit kreisförmigem Querschnitt bestehen.

3. Turbine nach einem der vorhergehenden Ansprüche, **dadurch gekennzeichnet, dass** sie aus Kunststoff besteht.

4. Fluidzähler, insbesondere Wasserzähler, ausgerüstet mit einer Turbine nach einem der vorhergehenden Ansprüche, **dadurch gekennzeichnet, dass** diese Turbine (1) drehbar in einer zylindrischen Einzelstrahl-Messkammer (2) eingebaut ist.
